# EUROPÄISCHE PATENTSCHRIFT

(11) **EP 3 352 703 B1**
(45) Veröffentlichungstag und Bekanntmachung des Hinweises auf die Patenterteilung: **03.11.2021**
(21) Anmeldenummer: 16770709.0
(22) Anmeldetag: 13.09.2016
(51) Int. Cl.: A61C 17/22, A61C 17/34, A46B 5/00

(54) **BÜRSTENKOPF**
BRUSH HEAD
TÊTE DE BROSSE

(30) Priorität: 22.09.2015 CH 13742015
(43) Veröffentlichungstag der Anmeldung: 01.08.2018
(73) Patentinhaber: Curaden AG, 6010 Kriens (CH)
(72) Erfinder: BREITSCHMID, Ueli, 6045 Meggen (CH); ZAVALLONI, Marco, 5610 Wohlen (CH)
(74) Vertreter: Keller Schneider Patent- und Markenanwälte AG (Bern)
(86) Internationale Anmeldenummer: PCT/EP2016/071581
(87) Internationale Veröffentlichungsnummer: WO 2017/050612

(56) Entgegenhaltungen:
- EP-A1- 2 263 496
- WO-A1-2004/041024
- WO-A1-2013/104020
- DE-U1- 29 724 601
- JP-A- 2012 161 368
- JP-U- S6 287 532
- US-A1- 2004 060 138
- US-A1- 2006 168 744
- US-A1- 2012 291 212
- US-B1- 6 766 548

## Beschreibung

### Technisches Gebiet

Die Erfindung betrifft einen Bürstenkopf für eine Schallzahnbürste, umfassend einen Bürstenhals, wobei der Bürstenhals in einem distalen Bereich ein Reinigungselement mit einer Ausrichtungsachse, insbesondere mehrere Filamente zur Reinigung von Zähnen und in einem proximalen Bereich einen Adapter zur Kopplung des Bürstenkopfs mit einem Schwingungserzeuger und zur Übertragung von Schwingungen des Schwingungserzeugers zum Reinigungselement umfasst. Weiter betrifft die Erfindung eine Schallzahnbürste mit einem Bürstenkopf sowie ein Herstellungsverfahren zur Herstellung des Bürstenkopfs.

### Stand der Technik

Unter einer Schallzahnbürste wird ein Gerät verstanden, mit welchem Zähne gereinigt werden können. Der Bürstenkopf der Schallzahnbürste wird typischerweise magnetisch oder über Piezoelemente angetrieben. Der Bürstenkopf kann zum Beispiel in einem Frequenzbereich von ca. 250 bis zu 300 Hertz schwingen. Die Zähne werden durch die in Schwingung versetzten Borsten gereinigt.

Dokument US 2006/168744 A1 offenbart einen Bürstenkopf, für eine elektrische Zahnbürste, umfassend einen Bürstenhals mit einem mittig angeordneten Draht von ausreichender Größe und Steifigkeit, um den Kopf und den Schaft in einer vom Benutzer gewählten Konfiguration zu halten.

Die bekannten Bürstenköpfe haben den Nachteil, dass diese das Reinigungspotential der Schallzahnbürsten nicht ausschöpfen.

Aufgabe der Erfindung ist es, einen dem eingangs genannten technischen Gebiet zugehörenden Bürstenkopf für eine Schallzahnbrüste zu schaffen, welcher eine besonders gute Reinigungswirkung erzielen kann.

Die Lösung der Aufgabe ist durch die Merkmale des Anspruchs 1 definiert. Gemäss der Erfindung schliesst eine Adapterachse mit der Ausrichtungsachse einen Winkel grösser 90°, vorzugsweise einen Winkel von 91° bis 120°, weiter vorzugsweise einen Winkel von 95° bis 105°, besonders bevorzugt einen Winkel von 98° bis 102° ein.

Üblicherweise weisen die Bürstenköpfe von Schallzahnbürsten keinen Knick auf. Traditionell werden Bürstenköpfe für Schallzahnbürsten ausschliesslich ohne Knick ausgeführt, womit eine Schwingungsübertragungsrichtung jeweils rechtwinklig zur Borstenrichtung liegt.

Überraschenderweise hat sich nun gezeigt, dass durch die erfindungsgemäss radikale Abkehr von der traditionellen Konstruktion der Bürstenköpfe für Schallzahnbürsten ein in der Reinigung von Zähnen äusserst effizienter Bürstenkopf geschaffen wird.

Der Knick in Richtung des Reinigungselements (d. h. nach vorne) erlaubt eine bessere Zugänglichkeit vor allem bei der Innenseite der unteren Frontzähne. Weiter schwingt damit das Reinigungselement, respektive die Filamente seitlich stark aus, so dass insbesondere im Unterkiefer eine wesentlich bessere Reinigung erzielt werden kann. An den Borsten gemessen wird zudem eine grössere Amplitude erreicht, so dass innerhalb der Schwingungsbewegung mit grösseren Bewegungen gereinigt werden kann. Weist der Knick in entgegengesetzter Richtung (nach hinten), erlaubt er wiederum ein optimales Reinigen in den Zahnzwischenräumen. Auch in dieser Ausführungsform treten die obengenannten Effekte auf.

Offensichtlich werden die Schwingungen durch das abgewinkelte Reinigungselement derart optimal übertragen, dass eine verbesserte Reinigungswirkung mit der Schallzahnbürste erreicht werden kann. Es hat sich zudem in einer Vielzahl von Experimenten gezeigt, dass der optimale Winkel zwischen der Ausrichtungsachse und der Adapterachse einen Winkel von 91° bis 120°, vorzugsweise einen Winkel von 95° bis 105°, besonders bevorzugt einen Winkel von 98° bis 102° einschliesst. Dieser Winkel liegt typischerweise, aber nicht zwangsläufig, auch als Knick im Bürstenhals vor.

Die Ausrichtungsachse ist vorliegend als Achse des Reinigungselements zu verstehen. Bei einer herkömmlichen Zahnbürste bezeichnet diese eine Achse eines Filaments. Bei mehreren Filamenten, welche zum Beispiel auf einer gewölbten Fläche angeordnet sind, wird mit der Ausrichtungsachse ein Mittelwert der einzelnen Achsen verstanden. Anderseits kann die Ausrichtungsachse aber bei einer einzelnen Borste zur Reinigung der Zahnzwischenräume auch als eine Drahtrichtung bezeichnet werden, an welchem rundum die Filamente befestigt sind.

Das Reinigungselement kann sowohl einen Winkel von 91° bis 120° als auch einen komplementären Winkel von 60° bis 89° aufweisen. Ob das Reinigungselement nach vorne (Winkel kleiner 90°) oder nach hinten (Winkel grösser 90°) abgeknickt ist, hängt von der Art des Reinigungselements ab. Wird zum Beispiel ein Bürstenkopf mit mehreren Filamentbüscheln eingesetzt, dann weist der Knick vorzugsweise einen Winkel kleiner als 90° auf - das Reinigungselement ist damit nach innen, hin zum Bürstenhals gebogen, womit ideal die Innenseite der unteren Frontzähne erreicht werden kann.

Wird jedoch ein einzelner Filamentbüschel, zum Beispiel zur Reinigung der Zahnzwischenräume eingesetzt, so weist der Knick vorzugsweise einen Winkel grösser 90° auf, womit das Reinigungselement nach hinten, vom Bürstenhals weg geknickt ist. Diese Anordnung ist besonders ergonomisch für die Reinigung entlang der Kontur der Zahnhälse respektive des Zahnfleischs. Bevorzugt ist deshalb das Reinigungselement auf einer dem eingeschlossenen Winkel gegenüberliegenden Seite des zweiten Abschnitts angeordnet. Damit weist der Knick nach hinten, so dass das Reinigungselement vom ersten Abschnitt weg weist.

Die Versuche haben gezeigt, dass unabhängig von der Knickrichtung ein Winkel von 100° oder 101° besonders optimal ist. Eine gute Wirkung tritt ab einem Winkel von 95° auf, eine sehr gute Wirkung wird ab einem Winkel von ungefähr 8° erreicht.

Vorzugsweise weist der Bürstenhals einen ersten Abschnitt umfassend den Adapter sowie einen zweiten Abschnitt umfassend das Reinigungselement auf, wobei eine erste Hauptachse des ersten Abschnitts und eine zweite Hauptachse des zweiten Abschnitts einen Winkel von 150° bis 179°, vorzugsweise einen Winkel von 165° bis 175°, besonders bevorzugt einen Winkel von 169° bis 171° einschliessen.

In Varianten kann der Bürstenhals auch eine anderweitige Form aufweisen, welche nicht direkt die Wirkungslinie des Adapters wiederspiegelt. Dem Fachmann sind eine Vielzahl von solchen Formen bekannt.

In einer besonders bevorzugten Ausführungsform sind die zweite Hauptachse und die Ausrichtungsachse zueinander rechtwinklig orientiert. In Varianten können aber auch andere Orientierungen zwischen den beiden Achsen vorliegen.

Bevorzugt weist das Reinigungselement mehrere Filamentbüschel auf, wobei aussenliegende Filamentbüschel über innenliegende Filamentbüschel hinausragen. Damit weist das Reinigungselement vorzugsweise eine konkave Oberfläche auf. Es hat sich in Versuchen gezeigt, dass damit eine besonders gute Reinigungswirkung erzielt werden kann.

In Varianten können aber auch andere Anordnungen der Filamentbüschel vorgesehen sein. Insbesondere kann auch genau ein Filamentbüschel vorgesehen sein, welcher nicht zwingen eine konkave Oberfläche aufweisen muss.

Erfindungsgemäss umfasst der Bürstenhals einen Frontteil und einen Rückteil, wobei der Frontteil das Reinigungselement umfasst und wobei der Frontteil und der Rückteil miteinander verbunden, vorzugsweise vergossen, sind. Damit wird ein besonders kostengünstiger Bürstenkopf geschaffen. Mit der Wahl der Materialien für den Frontteil und den Rückteil kann das Schwingungsverhalten des Bürstenkopfs derart eingestellt werden, dass eine optimale Reinigung von Zähnen erreicht werden kann.

In Varianten kann der Bürstenhals auch einstückig hergestellt werden. Weiter können der Frontteil und der Rückteil auch anderweitig miteinander verbunden werden, zum Beispiel durch Kleben, Schweissen wie Ultraschallschweissen, mit mechanischen Verbindungstechniken wie Clipverbindungen oder dergleichen. Weiter kann der Bürstenhals auch aus mehr als zwei Teilen bestehen.

Erfindungsgemäss besteht der Frontteil aus einem ersten Kunststoff und der Rückteil aus einem zweiten Kunststoff, wobei der zweite Kunststoff eine geringere Härte als der erste Kunststoff aufweist. Mit dieser Ausbildung des Bürstenhalses wird eine besonders optimale Schwingungsübertragung erreicht.

Bevorzugt weist die Schallzahnbürste einen Schwingungserzeuger mit einem Stift zum Einführen in den Adapter auf, wobei mit dem Stift eine Schwingung vom Schwingungserzeuger zum Reinigungselement übertragbar ist. Damit wird eine besonders effiziente Schwingungsübertragung erreicht. Der Schwingungserzeuger kann zum Beispiel mit einem oder mehreren Piezoelementen oder mit Elektromagneten realisiert sein.

In Varianten kann auch der Bürstenkopf den Stift umfassen. Weiter sind dem Fachmann auch andere Übertragungsmittel für die Schwingung bekannt. Insbesondere kann statt eines Stifts auch ein Bajonettverschluss oder andere dem Fachmann bekannte Verbindungstechniken eingesetzt werden.

Vorzugsweise sind der Adapter und der Stift derart ausgebildet, dass bei in den Adapter eingeführtem Stift eine Verdrehsicherung und eine Fixierung in der Adapterachse erreichbar sind. Damit dienen der Stift und der Adapter nicht nur zur Übertragung der Schwingungen, sondern auch der Montage des Bürstenkopfs am Schwingungserzeuger. Damit wird wiederum eine besonders einfach aufgebaute und damit kostengünstige Schallzahnbürste erreicht, da keine separaten Befestigungsmittel vorgesehen sein müssen.

In Varianten kann eine Verdrehsicherung auch über eine Aussenkontur des Bürstenkopfs im Bereich des Adapters erreicht werden. Dazu kann die Aussenkontur in einer entsprechend geformten Ausnehmung eines Gehäuses des Schwingungserzeugers aufgenommen sein. Weiter kann der Bürstenkopf auch über einen Schraubverschluss mit einer Arretierung mit dem Gehäuse verbindbar sein.

Vorzugsweise ist die Fixierung in der Adapterachse durch eine Rastnase des Adapters ausgebildet, welche in eine Nut des Stifts einrastbar ist. Damit wird eine besonders einfach axiale Fixierung des Bürstenkopfs am Stift erreicht. Die Rastnase kann dazu zum Beispiel an der Innenseite einer seitlich geschlitzten Hülse ausgebildet sein.

Alternativ kann der Bürstenkopf auch über eine Rastnase an einem Gehäuse des Schwingungserzeugers einrastbar sein. Weiter kann statt der Rastnase auch ein Reibschluss vorgesehen sein, um eine Fixierung in der Adapterachse zu erreichen. Der Reibschluss müsste jedoch derart ausgebildet sein, dass beim Betrieb der Schallzahnbürste der Bürstenkopf sich nicht vom Stift lösen kann.

Bevorzugt ist die Verdrehsicherung durch eine seitliche Abflachung des Stifts sowie durch eine entsprechende Form des Adapters ausgebildet. Auch damit wird eine besonders einfache und kostengünstige Befestigung des Bürstenkopfs am Stift erreicht.

In Varianten kann auch die Verdrehsicherung zwischen dem Bürstenkopf und einem Gehäuse des Schallerzeugers erreicht werden.

Bevorzugt weist der Stift am distalen Ende, im Anschluss an die Nut, die Abflachung auf.

In Varianten kann eine Abflachung auch in einem mittleren Bereich seitlich des Stifts ausgebildet sein. Damit könnte die Abflachung sowohl als Verdrehsicherung als auch als Aufnahme für eine Rastnase dienen.

In einem Verfahren zur Herstellung eines Bürstenkopfs, für eine Schallzahnbürste, werden ein Frontteil, umfassend eine Aufnahme für ein Reinigungselement, und ein Rückteil zusammen vergossen. Der Begriff Vergiessen bezeichnet hierbei eine Verschmelzung der Grenzflächen des Frontteils und des Rückteils während dem Formen dieser Teile. Dazu können die beiden Teile in Giessformen einzeln hergestellt und danach zusammengepresst werden.

In einer besonders bevorzugten Variante wird der Bürstenhals somit in einem einzigen Verfahrensschritt hergestellt, so dass die Produktionskosten tief gehalten werden können. Nach der Herstellung des Bürstenhalses ist lediglich das Reinigungselement mit diesem zu verbinden, um den Bürstenkopf fertig zu stellen. Damit wird ein besonders kosteneffizientes Herstellungsverfahren geschaffen.

Dem Fachmann ist klar, dass zu dieser Herstellungsmethode beliebig viele Alternativen existieren. So können die beiden Teile (Front- und Rückteil) auch separat hergestellt und anschliessend verklebt oder verschweisst werden.

Erfindungsgemäss weist der Rückteil eine geringere Härte als der Frontteil auf. Damit kann das Schwingungsverhalten für eine optimale Reinigungswirkung angepasst werden.

Erfindungsgemäss sind der Frontteil und der Rückteil aus Kunststoff ausgebildet, welche, vorzugsweise, jeweils einen ähnlichen Kristalinitätsgrad aufweisen. Damit kann im Herstellungsprozess eine optimale Verbindung zwischen den beiden Teilen erreicht werden.

In Varianten, welche nicht Teil der Erfindung sind, können der Rückteil und der Frontteil auch dieselbe Härte, aber andere physikalische Unterschiede, wie zum Beispiel unterschiedliche Elastizitäten, aufweisen. Im Betrieb der Schallzahnbürste sind Frequenzen von 2000 bis 8000 Hertz (Schwingungen pro Sekunde) vorgesehen. Die Frequenzen können aber auch höher, zum Beispiel bei 10kHz, 50kHz oder auch tiefer, zum Beispiel bei 200 Hz oder 500 Hz liegen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a: eine schematische Darstellung eines Querschnittes entlang einer Längsachse durch einen Bürstenkopf einer ersten Ausführungsform mit nach vorne geneigtem Kopfteil;
- Fig. 1b: eine Seitenansicht gemäss Figur 1a;
- Fig. 2a: eine schematische Darstellung eines Querschnittes entlang einer Längsachse durch einen Bürstenkopf einer zweiten Ausführungsform mit nach hinten geneigtem Kopfteil;
- Fig. 2b: eine Seitenansicht gemäss Figur 2a;
- Fig. 3: eine schematische Darstellung der ersten Ausführungsform in Richtung der Längsrichtung auf den Adapter;
- Fig. 4: eine schematische Darstellung eines Querschnittes entlang einer Längsachse durch den Adapter;
- Fig. 5a: eine schematische Darstellung des Schwingungserzeugers mit dem Stift in einer Seitenansicht;
- Fig. 5b: eine Darstellung gemäss Figur 5a um einen Winkel von 90° um eine Längsachse rotiert.

Grundsätzlich sind in den Figuren gleiche Teile mit gleichen Bezugszeichen versehen.

### Wege zur Ausführung der Erfindung

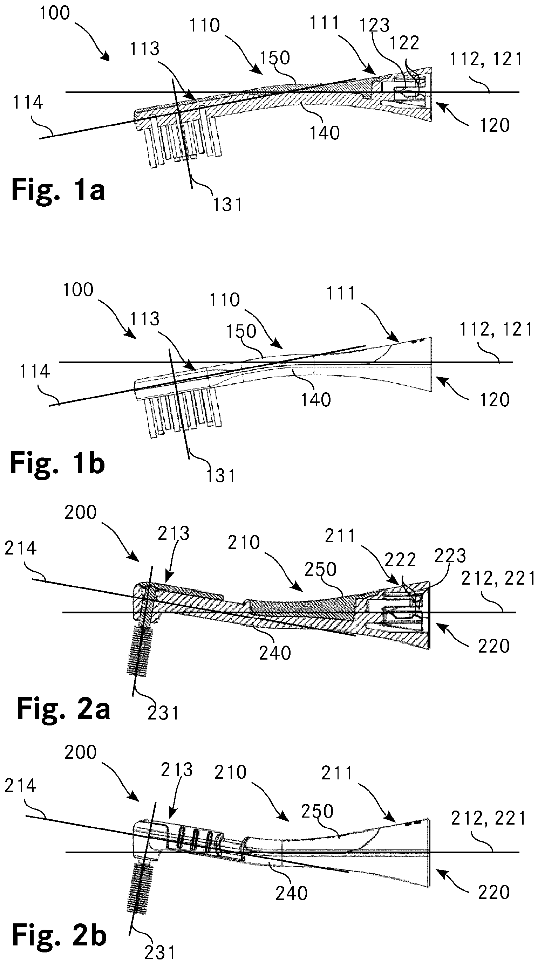

Die Figur 1a zeigt eine schematische Darstellung eines Querschnittes entlang einer Längsachse durch einen Bürstenkopf 100 einer ersten Ausführungsform mit nach vorne geneigtem Kopfteil. Die Figur 1b zeigt schliesslich eine Seitenansicht gemäss der Figur 1a. Der Bürstenkopf 100 umfasst einen Bürstenhals 110, an welchem distal das Reinigungselement 130, vorliegend eine Mehrzahl von Filamentbüscheln, und proximal einen Adapter 120 zum Ankoppeln an einen Schwingungserzeuger 300 respektive an ein Basisgerät, angeordnet sind. Das Basisgerät (nicht dargestellt) umfasst dabei typischerweise den Antrieb, d. h. den Schwingungserzeuger sowie Energieversorgung, zum Beispiel ein Akku oder ein Netzgerät, und dient zudem als Handgriff für die Schallzahnbürste.

Der Bürstenkopf 100 ist in einen ersten Abschnitt 111 mit dem Adapter 120 und in einen zweiten Abschnitt 113 mit dem Reinigungselement aufgeteilt. Der erste Abschnitt 111 und der zweite Abschnitt 113 weisen jeweils eine Hauptachse 112 respektive 114 auf. Der Adapter weist eine Adapterachse 121 auf, welche vorliegend mit der ersten Hauptachse 112 übereinstimmt. Die Adapterachse 121 bezeichnet eine Koppelungsrichtung zwischen dem Bürstenkopf 100 und dem Schwingungserzeuger 300. Im Bereich des Adapters 120 ist der Bürstenhals 110 in Richtung des proximalen Endes hin im Wesentlichen konisch aufgeweitet. Die zweite Hauptachse 114 ist zur ersten Hauptachse 112 vorliegend um einen Winkel von 10° geknickt, so dass das Reinigungselement 130 geringfügig nach vorne, in Richtung des Reinigungselements 130 geknickt ist. Der Winkel kann aber anderweitig gewählt sein, zum Beispiel kann der Winkel einen Wert zwischen 8° und 12° aufweisen. Das Reinigungselement 130 weist eine Ausrichtungsachse 131 auf, welche vorliegend mit der mittleren Richtung der Filamente übereinstimmt. Diese Ausrichtungsachse 131 schneidet die erste Hauptachse entsprechend in einem Winkel von 80° auf der Seite des Reinigungselements 130. Damit können die Innenseiten der vorderen Schneidezähne besonders gut gereinigt werden.

Der Bürstenhals 110 besteht aus zwei unterschiedlichen Materialien. Zum Einen umfasst der Bürstenhals 110 einen Frontteil 140, an welchem das Reinigungselement 130 befestigt ist. Der Frontteil erstreckt sich vom Adapter 120 bis zum distalen Ende des Bürstenkopfs 100. Auch der Adapter 120 ist vorliegend Bestandteil des Frontteils 140. Weiter umfasst der Bürstenhals 110 einen Rückteil 150, welcher die Rückseite, das heisst die dem Reinigungselement 130 gegenüberliegende Seite, abdeckt. Der Rückteil 150 besteht aus einem weicheren Material als der Frontteil 140. Durch diese Ausbildung kann das Schwingungsverhalten des Bürstenhalses 110 und damit des Reinigungselements 130 optimiert werden. In der Herstellung wird der Bürstenhals vorzugsweise in einem einzigen Arbeitsschritt hergestellt.

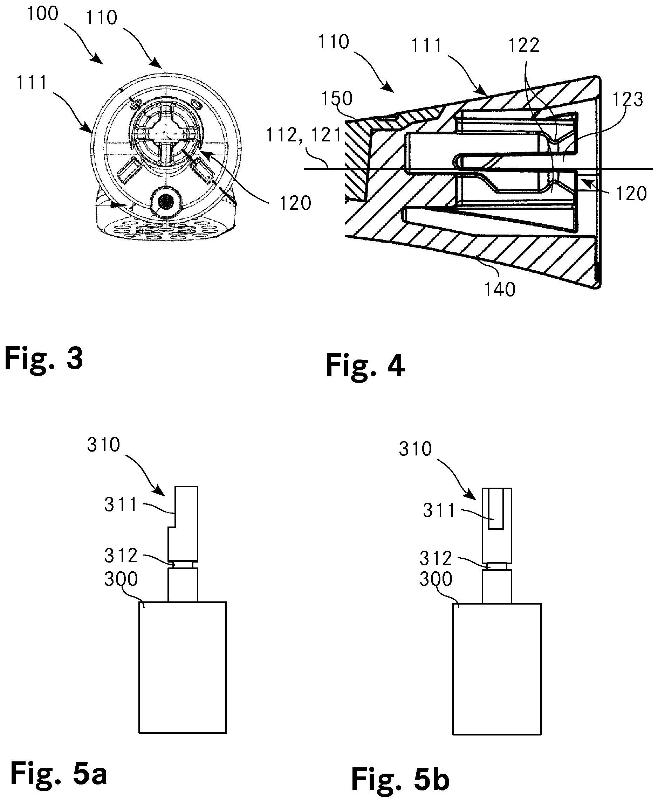

Der Adapter 120 dient zur Aufnahme eines Stifts 310 des Schwingungserzeugers 300. Dieser ist unter Bezugnahme auf die Figur 4 im Detail beschrieben (siehe unten).

Die Figur 2a zeigt eine schematische Darstellung eines Querschnittes entlang einer Längsachse durch einen Bürstenkopf 200 einer zweiten Ausführungsform mit nach hinten geneigtem Kopfteil. Die Figur 2b zeigt weiter eine Seitenansicht gemäss der Figur 2a.

Der Bürstenkopf 200 unterscheidet sich vom Bürstenkopf 100 im Wesentlichen durch die Ausbildung des Reinigungselements 230 und des Knicks, welcher um einen Winkel von 10° in die zum Bürstenkopf 100 entgegengesetzte Richtung geneigt ist.

Der Bürstenkopf 200 umfasst einen Bürstenhals 210, an welchem distal das Reinigungselement 230, vorliegend ein mit seitlich angeordneten Borsten versehener Draht, und proximal einen Adapter 220 zum Ankoppeln an einen Schwingungserzeuger 300 respektive an ein Basisgerät (siehe oben), angeordnet sind.

Der Bürstenkopf 200 ist in einen ersten Abschnitt 211 mit dem Adapter 220 und in einen zweiten Abschnitt 213 mit dem Reinigungselement 230 aufgeteilt. Der erste Abschnitt 211 und der zweite Abschnitt 213 weisen jeweils eine Hauptachse 212 respektive 214 auf. Der Adapter 220 weist eine Adapterachse 221 auf, welche wiederum mit der ersten Hauptachse 212 übereinstimmt. Die Adapterachse 121 bezeichnet auch eine Koppelungsrichtung zwischen dem Bürstenkopf 200 und dem Schwingungserzeuger 300. Im Bereich des Adapters 220 ist der Bürstenhals 210 in Richtung des proximalen Endes hin im Wesentlichen konisch aufgeweitet. Die zweite Hauptachse 214 ist zur ersten Hauptachse 212 vorliegend um einen Winkel von 10° geknickt, so dass das Reinigungselement 230 geringfügig nach hinten, entgegen der Richtung des Reinigungselements 230 geknickt ist. Der Winkel kann aber anderweitig gewählt sein, zum Beispiel kann der Winkel einen Wert zwischen 8° und 12° aufweisen. Das Reinigungselement 230 weist eine Ausrichtungsachse 231 auf, welche vorliegend mit der Richtung des Drahtes übereinstimmt. Diese Ausrichtungsachse 231 schneidet die erste Hauptachse 212 entsprechend in einem Winkel von 100° auf der Seite des Reinigungselements 230. Damit können die Innenseiten der vorderen Schneidezähne besonders gut gereinigt werden.

Der Bürstenhals 210 besteht wiederum im Wesentlichen aus zwei unterschiedlichen Materialien (siehe oben). Der Adapter 220 ist indes identisch zum Adapter 120 ausgebildet.

Schliesslich ist an der dem Reinigungselement gegenüberliegenden Seite des Bürstenhalses 210 ein entlang des Bürstenhalses in Längsrichtung verschiebbares Verschlusselement ausgebildet, womit das austauschbare Reinigungselement 230 am Bürstenhals 210 fixiert werden kann. Dieses Verschlusselement ist in der Figur 2b gut ersichtlich.

Die Figur 3 zeigt eine schematische Darstellung der ersten Ausführungsform des Bürstenhalses 110 in Längsrichtung als Draufsicht auf den Adapter. Dabei ist ersichtlich, dass der Adapter 120 im Wesentlichen kreiszylindrisch ausgebildet ist. Der Adapter 120 weist vier Rastnasen 122 auf, welche jeweils durch einen Schlitz 123 unterbrochen sind.

Die Figur 4 zeigt den Adapter 120 als eine schematische Darstellung eines Querschnittes entlang einer Längsachse.

Der Adapter 120 dient zur Aufnahme eines Stifts 310 mit einer Abflachung 311 und einer Nut 312 (siehe Figuren 5a, 5b). Dazu weist der Adapter 120 eine im Wesentlichen kreiszylindrische Aufnahme auf, welche im Aufnahmengrund eine seitliche Abflachung sowie Rastnasen 122 aufweist. Die Aufnahme weist im Wesentlichen eine Form eines Zylindermantels auf, welcher in Öffnungsrichtung mindestens einen seitlichen Schlitz 123 sowie nach innen ragende Rastnasen 123 aufweist. Auf Grund des Schlitzes 123 ist die Aufnahme im Randbereich und damit die Rastnase 123 federnd ausgebildet. Die seitliche Abflachung im Aufnahmengrund dient zur Aufnahme des seitlich abgeflachten Endbereichs des Stiftes 310. Schliesslich ist der Adapter 120 derart ausgebildet, dass der Stift 310 zusätzlich über Reibschluss gehalten werden kann, so dass eine Schwingungsübertragung nicht beeinträchtigt wird.

Die Figur 5a zeigt eine schematische Darstellung des Schwingungserzeugers 300 mit dem Stift 310 in einer Seitenansicht. Die Figur 5a zeigt schliesslich eine Darstellung gemäss der Figur 5a, jedoch um einen Winkel von 90° um eine Längsachse rotiert.

Der Schwingungserzeuger 300 basiert vorzugsweise auf Piezoelementen oder Magneten und überträgt die Schwingung respektive die Ultraschallschwingung an einen Stift 310, welcher fix mit dem Schwingungserzeuger 300 verbunden ist. Der Bürstenkopf 100 respektive 200 wird vorzugsweise lediglich über diesen Stift 310 mit dem Schwingungserzeuger 300 verbunden. In einem distalen Bereich weist der Stift 310 eine Abflachung 311 auf. Weiter weist der Stift 310 eine Nut 312 zur Aufnahme der Rastnasen 122 respektive 222 auf. Der Stift 310 und der Adapter 120 respektive 220 sind derart ausgebildet, dass der Stift 310 durch die Abflachung 311 verdrehgesichert und durch die Nut 312 respektive die Rastnasen 122, 222 axial gesichert gehalten werden kann. Weiter kann der Stift 310 auch zusätzlich über Reibschluss im Adapter 120, 220 gehalten sein, so dass eine Schwingungsübertragung nicht beeinträchtigt wird.

Der Schwingungserzeuger 300 ist vorliegend schemenhaft dargestellt. Typischerweise ist dieser in einem Gehäuse verbaut, welches ergonomisch vom Benutzer ergriffen werden kann und welches weitere Bauteile wie den Akkumulator, ein Netzteil, Steuergeräte, Anzeigen für den Benutzer etc. umfassen kann.

Zusammenfassend ist festzustellen, dass erfindungsgemäss ein Bürstenkopf für Schallzahnbürsten geschaffen wird, welcher eine besonders gute und effiziente Reinigung von Zähnen erlaubt.

## Patentansprüche

1. Bürstenkopf (100, 200) für eine Schallzahnbürste, umfassend einen Bürstenhals (110, 210), wobei der Bürstenhals (110, 210)
a. in einem distalen Bereich ein Reinigungselement (130, 230) mit einer Ausrichtungsachse (131, 231), insbesondere mehrere Filamente zur Reinigung von Zähnen;und
b. in einem proximalen Bereich einen Adapter (120, 220) mit einer Adapterachse (121, 221) zur Kopplung des Bürstenkopfs (100, 200) mit einem Schwingungserzeuger (300) und zur Übertragung von Schwingungen des Schwingungserzeugers (300) zum Reinigungselement (130, 230), umfasst;
c. die Adapterachse (121, 221) mit der Ausrichtungsachse (131, 231) einen Winkel grösser 90°, vorzugsweise einen Winkel von 91° bis 120°, weiter vorzugsweise einen Winkel von 95° bis 105°, besonders bevorzugt einen Winkel von 98° bis 102° einschliesst
wobei
d. der Bürstenhals (110, 210) einen Frontteil aus einem ersten Material und einen Rückteil aus einem zweiten Material umfasst welche miteinander verbunden sind, wobei der Frontteil das Reinigungselement umfasst, und wobei der Frontteil aus einem ersten Kunststoff besteht und der Rückteil aus einem zweiten Kunststoff besteht, und wobei der zweite Kunststoff, zum Einstellen eines Schwingungsverhaltens, sodass eine optimale Reinigung von Zähnen erreicht werden kann, eine geringere Härte als der erste Kunststoff aufweist.

2. Bürstenkopf (100, 200) nach Anspruch 1, **dadurch gekennzeichnet, dass** der Bürstenhals (110, 210) einen ersten Abschnitt (111, 211), umfassend den Adapter sowie einen zweiten Abschnitt (113, 213), umfassend das Reinigungselement (130, 230), aufweist, wobei eine erste Hauptachse (112, 212) des ersten Abschnitts (111, 211) und eine zweite Hauptachse (114, 214) des zweiten Abschnitts (113, 213) einen Winkel von 150° bis 179°, vorzugsweise einen Winkel von 165° bis 175°, besonders bevorzugt einen Winkel von 168° bis 172° einschliessen.

3. Bürstenkopf (100, 200) nach Anspruch 2, **dadurch gekennzeichnet, dass** das Reinigungselement (130, 230) auf einer dem eingeschlossenen Winkel gegenüberliegenden Seite des zweiten Abschnitts (113, 213) angeordnet ist.

4. Bürstenkopf (100, 200) nach einem der Ansprüche 1 bis 3, **dadurch gekennzeichnet, dass** das Reinigungselement (130, 230) mehrere Filamentbüschel aufweist, wobei aussenliegende Filamentbüschel über innenliegende Filamentbüschel hinausragen.

5. Bürstenkopf (100, 200) nach einem der Ansprüche 1 bis 4, **dadurch gekennzeichnet, dass** der Frontteil (140, 240) und der Rückteil (150, 250) miteinander vergossen sind.

6. Schallzahnbürste umfassend einen Bürstenkopf (100, 200) nach einem der Ansprüche 1 bis 5.

7. Verfahren zur Herstellung eines Bürstenkopfs (100, 200), für eine Schallzahnbürste, nach einem der Ansprüche 1 bis 5, **dadurch gekennzeichnet, dass** das Frontteil (140, 240), das Rückteil (150, 250)

## Claims

1. Brush head (100, 200) for a sonic toothbrush, comprising a brush neck (110, 210), wherein the brush neck (110, 210),
a. in a distal region, comprises a cleaning element (130, 230) with an alignment axis (131, 231), in particular a plurality of filaments for cleaning teeth; and,
b. in a proximal region, comprises an adapter (120, 220), which has an adapter axis (121, 221) and is intended for coupling the brush head (100, 200) to a vibration generator (300) and for transmitting vibrations from the vibration generator (300) to the cleaning element (130, 230) ;
c. the adapter axis (121, 221) and the alignment axis (131, 231) enclose an angle greater than 90°, preferably an angle of 91° to 120°, further preferably an angle of 95° to 105°, particularly preferably an angle of 98° to 102°,
wherein
d. the brush neck (110, 210) comprises a front part made of a first material and a rear part made of a second material, the two parts being connected to one another, wherein the front part comprises the cleaning element, and wherein the front part consists of a first plastic and the rear part consists of a second plastic, and wherein, in order to set such a vibration behaviour that optimum cleaning of teeth can be achieved, the second plastic has a lower level of hardness than the first plastic.

2. Brush head (100, 200) according to Claim 1, **characterized in that** the brush neck (110, 210) has a first portion (111, 211) comprising the adapter and also a second portion (113, 213) comprising the cleaning element (130, 230), wherein a first main axis (112, 212) of the first portion (111, 211) and a second main axis (114, 214) of the second portion (113, 213) enclose an angle of 150° to 179°, preferably an angle of 165° to 175°, particularly preferably an angle of 168° to 172°.

3. Brush head (100, 200) according to Claim 2, **characterized in that** the cleaning element (130, 230) is arranged on a side of the second portion (113, 213) which is located opposite the enclosed angle.

4. Brush head (100, 200) according to one of Claims 1 to 3, **characterized in that** the cleaning element (130, 230) has a plurality of clusters of filaments, wherein outer clusters of filaments project beyond inner clusters of filaments.

5. Brush head (100, 200) according to one of Claims 1 to 4, **characterized in that** the front part (140, 240) and the rear part (150, 250) are moulded to one another.

6. Sonic toothbrush comprising a brush head (100, 200) according to one of Claims 1 to 5.

7. Method for producing a brush head (100, 200), for a sonic toothbrush, according to one of Claims 1 to 5, **characterized in that** the front part (140, 240) and the rear part (150, 250) are moulded together.

## Revendications

1. Tête de brosse (100, 200) destinée à une brosse à dents sonique et comprenant un col de brosse (110, 210), le col de brosse (110, 210) comprenant
a. dans une zone distale un élément de nettoyage (130, 230) pourvu d'un axe d'orientation (131, 231), en particulier une pluralité de filaments de nettoyage de dents ; et
b. dans une zone proximale un adaptateur (120, 220) pourvu d'un axe adaptateur (121, 221) et destiné à accoupler la tête de brosse (100, 200) à un générateur de vibrations (300) et à transmettre les vibrations du générateur de vibrations (300) à l'élément de nettoyage (130, 230) ;
c. l'axe adaptateur (121, 221) formant avec l'axe d'orientation (131, 231) un angle supérieur à 90°, de préférence un angle de 91° à 120°, plus préférablement un angle de 95° à 105°, de manière particulièrement préférée un angle de 98° à 102°,
d. le col de brosse (110, 210) comprenant une partie avant en une première matière et une partie arrière en une deuxième matière, lesquelles parties étant reliées l'une à l'autre, la partie avant comprenant l'élément de nettoyage, et la partie avant étant en une première matière synthétique et la partie arrière étant en une deuxième matière synthétique, et la deuxième matière synthétique présentant une dureté inférieure à celle de la première matière synthétique pour définir un comportement vibratoire permettant d'obtenir un nettoyage optimal des dents.

2. Tête de brosse (100, 200) selon la revendication 1, **caractérisée en ce que** le col de brosse (110, 210) comporte une première portion (111, 211) comprenant l'adaptateur et une deuxième portion (113, 213) comprenant l'élément de nettoyage (130, 230), un premier axe principal (112, 212) de la première portion (111, 211) et un deuxième axe principal (114, 214) de la deuxième portion (113, 213) formant un angle de 150° à 179°, de préférence un angle de 165° à 175°, de manière particulièrement préférée un angle de 168° à 172°.

3. Tête de brosse (100, 200) selon la revendication 2, **caractérisée en ce que** l'élément de nettoyage (130, 230) est disposé sur un côté de la deuxième portion (113, 213) qui est opposé à l'angle formé.

4. Tête de brosse (100, 200) selon l'une des revendications 1 à 3, **caractérisée en ce que** l'élément de nettoyage (130, 230) comporte une pluralité de touffes de filaments, les touffes de filaments externes dépassant les touffes de filaments internes.

5. Tête de brosse (100, 200) selon l'une des revendications 1 à 4, **caractérisée en ce que** la partie avant (140, 240) et la partie arrière (150, 250) sont coulées ensemble.

6. Brosse à dents sonique comprenant une tête de brosse (100, 200) selon l'une des revendications 1 à 5.

7. Procédé de réalisation d'une tête de brosse (100, 200) destinée à une brosse à dents sonique selon l'une des revendications 1 à 5, **caractérisé en ce que** la partie avant (140, 240) et la partie arrière (150, 250) sont coulées ensemble.
